# EUROPÄISCHE PATENTSCHRIFT

(11) **EP 3 826 776 B1**
(45) Veröffentlichungstag und Bekanntmachung des Hinweises auf die Patenterteilung: **23.04.2025**
(21) Anmeldenummer: 19759354.4
(22) Anmeldetag: 26.08.2019
(51) Int. Cl.: B07B 4/00, B07B 4/02

(54) **VORRICHTUNG UND VERFAHREN ZUM ENTSTAUBEN VON SCHÜTTGÜTERN**
APPARATUS AND METHOD FOR DE-DUSTING BULK MATERIALS
DISPOSITIF ET PROCÉDÉ POUR LE DÉPOUSSIÉRAGE DE PRODUITS EN VRAC

(30) Priorität: 01.10.2018 DE 102018124207
(43) Veröffentlichungstag der Anmeldung: 02.06.2021
(73) Patentinhaber: Helios Gerätebau für Kunststofftechnik GmbH, 83022 Rosenheim (DE)
(72) Erfinder: WILHELM, Klaus, 83026 Rosenheim (DE)
(74) Vertreter: Weickmann & Weickmann PartmbB
(86) Internationale Anmeldenummer: PCT/EP2019/072710
(87) Internationale Veröffentlichungsnummer: WO 2020/069798

(56) Entgegenhaltungen:
- EP-A1- 2 711 097
- WO-A1-2016/041968
- WO-A1-2018/073053

## Beschreibung

### I. Anwendungsgebiet

Die Erfindung betrifft das Befreien von Schüttgütern von dem darin enthaltenen Staub, insbesondere mittels Ionisierung, wobei der Staub vor allem häufig mittels elektrostatischer Aufladung an den Granulatkörnern haftet.

### II. Technischer Hintergrund

Vor allem in der Kunststofftechnik, aber auch in der Pharmazie - und der Lebensmitteltechnik, müssen häufig Rohmaterialien in Form von Schüttgütern - beispielsweise Granulaten, Mahlgütern, groben Pulvern o.ä. - gehandhabt werden. Für die Zwecke der vorliegenden Anmeldung werden alle Schüttgüter mit dem verkürzenden Begriff "Granulat" bezeichnet.

Gerade das Transportieren dieser Schüttgüter erfolgt häufig mittels pneumatischer Förderung, insbesondere mittels Flug-Förderung, bei der das Granulat mittels Luftströmung und größtenteils darin mitfliegend durch Förderleitungen an den gewünschten Ort gebracht wird.

Das Granulat soll für die weitere Verarbeitung, beispielsweise dem Einsatz als Rohmaterial in einer Kunststoff-Spritzgussmaschine, möglichst sauber sein und insbesondere nicht mit staubförmigen Verunreinigungen belastet sein. Diese staubförmigen Verunreinigungen können sowohl aus Fremdmaterial bestehen, welches bei der Herstellung oder beim Transport unbeabsichtigt dem Granulat beigefügt wurde oder es kann sich auch um staubförmige Partikel aus dem gleichen Material wie das Granulat selbst handeln, was jedoch je nach anschließendem Verwendungszweck ebenfalls unerwünscht sein kann.

Staub oder staubförmige Verunreinigungen im Sinne der vorliegenden Beschreibung sollen vorzugsweise eine Partikelgröße besitzen, deren Durchmesser höchstens 1/10, besser höchstens 1/30, besser höchstens 1/100 besser höchstens 1/1000 des Durchmessers eines Granulat-Kornes beträgt.

Deshalb besteht das generelle Ziel, solche Granulate vor der Verwendung von dem darin enthaltenen Staubanteil zu trennen.

Hierfür stehen unterschiedliche Techniken zur Verfügung, von einfachen Sieben über ein Abtrennen der Transportluft von Granulat und Filtern der Transportluft bis hin zu der Fraktionentrennung mittels eines Zyklons.

Eines der dabei auftretenden Probleme ist die starke Haftung von Staubpartikeln und Granulatpartikeln aneinander, aber auch die Anhaftung von Staubpartikeln an Vorrichtungsteilen wie Förderleitungen oder Granulatbehältern.

Diese starke Anhaftung ist häufig durch elektrostatische Aufladung bewirkt, sodass ein Entfernen des Staubes mit mechanischen Maßnahmen in der Regel erst durchgeführt werden kann, wenn diese Bindungskräfte aufgehoben worden sind.

Prinzipiell ist dies bekanntermaßen dadurch möglich, dass die unterschiedlich geladenen und sich dadurch anziehenden Teile, in diesem Fall Staubpartikel einerseits und Granulatpartikel andererseits, jeweils statisch entladen werden, beispielsweise indem die eine Fraktion geerdet wird.

Bei einer sehr großen Anzahl von sehr kleinen Partikeln, wie im vorliegenden Fall, ist dies in der Praxis jedoch schwierig.

Beispielsweise wurde bereits versucht, das Granulat durch ständiges Hochwirbeln im unten verschlossenen Entstaubungsbehälter zu Vereinzeln und in innigen Kontakt mit ionisierter Luft zu bringen. Dies kann jedoch allein durch das Zusammenprallen von Granulatkörnern weiteren Abrieb und dadurch Staub hervorrufen.

Die EP 2 711 097 A1 zeigt eine Vorrichtung zum chargenweisen, Entstauben eines Granulates, mit einem stromabwärts des Entstaubungsbehälters angeordneten Förderstrom-Erzeuger in Form einer Ejektor-Druckluftdüse mit einem Drucklustanschluss und einem Entstaubungsbehälter der, der aufweist
- mindestens eine Granulat-Einlassöffnung für das Granulat
- eine Granulat-Auslassöffnung im unteren Teil des Enstaubungsbehälters, insbesondere in dessen Boden
- eine Luft-Auslassöffnung, die insbesondere im oberen Teil des Entstaubungsbehälters angeordnet ist,
- einen Ionisator
- eine Aufwirbelungs-Einheit zum Aufwirbeln des Granulates im Entstaubungsbehälter
- eine Steuerung, die in der Lage ist, die Aufwirbelungs-Einheit und alle beweglichen Teile, insbesondere Ventile, der Vorrichtung zu steuern
- die Granulat-Auslassöffnung, vorzugsweise verschließbar
- die den Entstaubungsbehälter umgebenden Umfangswände zumindest auf den dem Innenraum zugewandten Innenflächen aus einem elektrisch nicht leitfähigen Material, insbesondere Glas, bestehen
- die Aufwirbelungs-Einheit eine nach oben gerichtete Aufwirbelungs-Düse, die mit einem Druckluft-Anschluss in Verbindung steht, im unteren Teil des Entstaubungsbehälters, insbesondere in der Granulat-Auslassöffnung aufweist.

In der WO 2018/073053 A1 wurde versucht, die staubbeladene Luft aus dem Granulatbehälter über eine Luft-Auslassöffnung abzusaugen und nicht mittels Überdruck hinaus zu drücken, wobei die Luft-Auslassöffnung von einem Sieb verschlossen war, welches ein Granulatkorn nicht durchdringen konnte. Hierbei ist die Granulat-Auslassöffnung mittels einer Klappe verschlossen.

Die WO 2016/041968 A1 offenbart mehrere Düsen in der Auslassöffnung. Diese Düsen sind aber Teil des Verschlusselements.

### III. Darstellung der Erfindung

### a) Technische Aufgabe

Es ist daher die Aufgabe gemäß der Erfindung, eine Vorrichtung zum chargenweisen Entstauben eines Granulates zur Verfügung zu stellen, welche sehr kompakt und leicht gebaut ist, kostengünstig herzustellen ist aufgrund möglichst weniger Einzelteile und gerade deshalb sehr zuverlässig funktioniert, sowie ein Verfahren zum Betrieb einer solchen Vorrichtung, welches sehr variabel ist.

### b) Lösung der Aufgabe

Diese Aufgabe wird durch die Merkmale der Ansprüche **1** und **9** gelöst. Vorteilhafte Ausführungsformen ergeben sich aus den Unteransprüchen.

Hinsichtlich des **Verfahrens** wird dies erreicht, indem eine an sich bekannte, von unten nach oben gerichtete Gegenströmung im Entstaubungsbehälter erzeugt wird, die stark genug ist, um Granulatkörner - die sich im Stand der Technik als Charge auf dem den Boden des Entstaubungsbehälters bildenden geschlossenen Verschlusselement befunden haben - mit der Gegenströmung nach oben zu bewegen und dadurch zu Vereinzeln.

Vor allem wenn die Strömungsgeschwindigkeit der Gegenströmung mit der Höhe geringer wird - was beispielsweise der Fall ist, wenn sich der Querschnitt des Luftstromes nach oben vergrößert - nimmt die auf die Granulatkörner nach oben einwirkende Kraft ab, bis die Schwerkraft überwiegt, und die Granulatkörner in einem in einer bestimmten Höhenlage auftretenden Umkehrbereich ihren Anstieg beenden und - in der Regel außerhalb des Querschnittes des Luftstromes oder an dessen Rand - wieder absinken in die Granulat-Ansammlung hinein.

Von dort aus können Sie bei weiter andauernder Gegenströmung wieder in diese hinein gelangen und diesen Kreislauf auch mehrfach vollziehen, abhängig davon wie lange man die Luftströmung aufrechterhält.

Durch diese Vereinzelung ist bekanntermaßen das Absaugen der Staubpartikel aus dem Granulat - auch wenn sie dabei noch leicht an den Granulat-Körnern anhaften - nach oben mittels eines entsprechenden Unterdruckes, vor allen im oder oberhalb des Umkehrbereiches, möglich.

Dabei ist zunächst zwischen einem chargenweisen Betrieb und einem kontinuierlichen Betrieb zu unterscheiden.

Im Stand der Technik wurde das Entstauben eines Granulates, insbesondere eines pneumatisch herangeförderten Granulates, chargenweise durchgeführt, also die Granulat-Auslassöffnung am unteren Ende des Entstaubungsbehälters verschlossen, in den Entstaubungsbehälter eine Charge an Granulat bis zu einem vorgegebenen Füllstand eingefüllt und dann das Granulat durch beispielsweise das Aufwirbeln des Granulates mittels der gegen die Schwerkraft gerichteten Gegenströmung und Hinausbefördern, insbesondere Absaugen der staubbeladenen Luft, jedoch ohne die Granulatkörner, nach oben durchgeführt.

Auch eine Ionisierung der Luft im Entstaubungsbehälter ist hierbei bereits bekannt.

Anschließend wurde durch Öffnen des Verschlusselementes der Granulat-Auslassöffnung das entstaubte Granulat in den Zwischenbehälter darunter fallen gelassen.

Erfindungsgemäß wird bei einem chargenweisen Betrieb auch während des Einfüllvorganges die untere Granulat-Auslassöffnung nicht durch ein Verschlusselement der Vorrichtung wie etwa eine Verschlussklappe verschlossen, sodass eine solche auch überhaupt nicht vorhanden ist.

Falls beim Einfüllvorgang keine Gegenströmung erzeugt wird, fallen die Granulatkörner herab bis auf die Oberfläche der Schüttung aus Granulat im meist darunter befindlichen Zwischenbehälter, wobei sich diese Oberfläche auch auf Höhe der unteren Granulat-Auslassöffnung des Entstaubungsbehälters oder sogar etwas darüber, also bereits im Entstaubungsbehälter, befinden kann.

Dabei findet nur eine geringfügige Entstaubung statt aufgrund des Hinausdrückens oder Hinaussaugens der im Entstaubungsbehälter eingebrachten Luft, vorzugsweise mittels anliegenden Unterdruck, über den jedoch nur frei in der Luft schwebende Staub-Partikel abgesaugt werden.

Wenn die Oberfläche der Schüttung im Zwischenbehälter sehr hoch steht oder gar den Entstaubungsbehälter bereits erreicht hat, sammelt sich dann die neu eingefüllte Charge bereits im Entstaubungsbehälter und kann anschließend durch Aufwirbeln besser entstaubt werden.

Vorzugsweise gibt es jedoch bereits während des Einfüllvorganges eine Gegenströmung. Der erfindungsgemäße gegliederte Verfahrensablauf besteht somit darin, dass für den chargenweisen Betrieb
A) mit oder ohne Gegenströmung (32) im Entstaubungsbehälter (9) in diesen Granulat (4) eingefüllt wird bis zu einem vorgegebenen Füllstand,
B) bei Erreichen des Füllstandes der Einfüllvorgang beendet wird,
C) das Entstauben der eingefüllten Charge (4') im Entstaubungsbehälter (9) mittels eingebrachtem ionisierten Gas, insbesondere ionisierter Luft, wenn der Füllstand eines unterhalb der Granulat-Auslassöffnung angeordneten Zwischenbehälters die Höhe der Granulat-Auslassöffnung erreicht und Hochwirbeln der Granulat-Körner (4) durch eine Gegenströmung (32) sowie Hinausbefördern, insbesondere Absaugen des staubbeladenen Gases durchgeführt wird,
D) der Entstaubungsbehälter (9) durch Spülen mit einem ionisierten Gas, insbesondere ionisierter Luft, gereinigt wird,
E) nach Absinken des Füllstandes unter den vorgegebenen Füllstand zumindest die Schritte A) bis C) sowie E) erneut durchgeführt werden,

Die Stärke der Gegenströmung, also deren Strömungsgeschwindigkeit und/oder deren Volumenstrom und oder Druck, wird dabei im Schritt A) vorzugsweise so gesteuert, dass das Granulat mehrheitlich oberhalb der Granulat-Auslassöffnung gehalten wird, also sozusagen schwebt, ohne dabei nennenswert hochgewirbelt zu werden.

Mehrheitlich bedeutet, dass es sich dabei um mehr als 70 Volumenprozent, besser mehr als 80 Volumenprozent, besser mehr als 90 Volumenprozent, besser mehr als 95 Volumenprozent, besser mehr als 98 Volumenprozent handelt.

Nicht nennenswert Hochwirbeln bedeutet in diesem Zusammenhang, dass die Mehrheit der Granulatkörner nicht über die Höhe des unteren Viertels, insbesondere nicht über die Höhe des unteren Drittels, des Entstaubungsbehälters hochgewirbelt werden.

Die Gegenströmung sollte dabei nicht so stark sein, dass an der Granulat-Einlassöffnung der Druck im Entstaubungsbehälter größer ist als der Druck im Einfüllstutzen für das Granulat, da sonst der Einfüll-Vorgang unterbrochen würde. In der Regel wird die nach oben gerichtete Gegenströmung durch das Einschießen von Druckluft erzeugt, eine schwache Gegenströmung kann jedoch auch durch die Strömung an eingebrachtem ionisierten Gas, insbesondere ionisierter Luft, erreicht werden.

Das Hochwirbeln im Schritt C) kann auch mehrfach hintereinander durch jeweils kurze Druckluftstöße durchgeführt werden.

Nach Beenden des Einfüll-Vorganges wird die in den Entstaubungsbehälter eingeführte Charge weiter entstaubt, indem die Granulatkörner mehrheitlich hochgewirbelt werden aber insbesondere nicht so hoch, dass sie die obere Luft-Auslassöffnung erreichen, vorzugsweise auch nicht den eventuell noch darunter angeordneten Einfüllstutzen.

Die Granulat-Auslassöffnung bleibt also dauerhaft offen, was bedeuten soll, dass kein Verschlusselement als Teil der Vorrichtung vorhanden ist, welches die Granulat-Auslassöffnung verschließen kann.

Falls sich stromabwärts der Granulat-Auslassöffnung, beispielsweise von dem nachgeordneten Zwischenbehälter her, das Granulat hochstaut bis durch die Granulat-Auslassöffnung hindurch, kann diese dadurch teilweise oder ganz verschlossen werden, aber ohne ein dicht verschließendes Verschlusselement, welches Teil der Vorrichtung ist. Dadurch kann die Durchlässigkeit der Granulat-Auslassöffnung mehr oder weniger stufenlos durch Verändern der Gegenströmung gesteuert werden.

Die Granulatkörner werden vom Vorratsbehälter aus in den Entstaubungsbehälter mittels Überdruck hinein transportiert.

Dagegen kann die staubbeladene Luft, vorzugsweise nach oben, aus dem Entstaubungsbehälter durchaus mittels Saugluft entfernt werden, deren Sogwirkung jedoch so eingestellt wird, dass sie keine Granulatkörner aus der Luftauslassöffnung abtransportieren kann, auch wenn dort kein Sieb zum Zurückhalten der Granulatkörner vorhanden ist.

Vorzugsweise findet das Hochwirbeln durch Einschießen von Druckluft und das Absaugen der staubbeladenen Luft aus dem Entstaubungsbehälter mittels Saugluft immer nur gleichzeitig statt.

Ein Ansaugen des Granulates durch den Entstaubungsbehälter hindurch von dem Vorratsbehälter mittels einer stromabwärts des Entstaubungsbehälters angeordneten Unterdruck-Quelle ist dagegen nicht möglich, da diese Unterdruck-Quelle durch die immer offene Granulat-Auslassöffnung hindurch Falschluft ziehen würde und kein Granulat aus dem Vorratsbehälter ziehen würde.

Im Schritt A) und/oder C) wird die Stärke der Gegenströmung so gesteuert, dass die Granulatkörner die obere Luft-Auslassöffnung und/oder den Einfüllstutzen nicht erreichen.

Ist das Entstauben beendet, wird die gegen Strömung so reduziert oder ganz abgeschaltet, dass die Granulatskörner nach unten fallen und je nach Füllstand im darunter befindlichen Zwischenbehälter bis in den Zwischenbehälter fallen.
in einer nicht beanspruchten Ausführung kann auch im kontinuierlichen Betrieb entstaubt werden, indem
a) in den Entstaubungsbehälter (9) Granulat (4) kontinuierlich eingefüllt wird entsprechend dem Verbrauch von Granulat (4) aus dem Entstaubungsbehälter (9),
b) gleichzeitig das Entstauben des Granulates (4) im Entstaubungsbehälter (9) mittels eingebrachtem ionisierten Gas, insbesondere ionisierter Luft, und Hochwirbeln der Granulat-Körner (4) durch eine Gegenströmung (32) sowie Hinausbefördern, insbesondere Absaugen des staubbeladenen Gases durchgeführt wird
c) wobei die durchschnittliche Verweilzeit der Granulatkörner (4) im Entstaubungsbehälter (9) durch Steuerung der Stärke der Gegenströmung (32) festgelegt wird.

Sowohl im chargenweisen Betrieb als auch im kontinuierlichen Betrieb kann durch Steuern Stärke der Gegenströmung, insbesondere der Strömungsgeschwindigkeit und/oder des Volumenstromes der Gegenströmung auch beeinflusst werden, bis zu welcher Höhe im Entstaubungsbehälter das Granulat hochgewirbelt wird.

Der Einfüllvorgang muss im kontinuierlichen Betrieb nur unterbrochen werden, wenn der Verbrauch an Granulat stromabwärts des Entstaubungsbehälters geringer ist als die pro Zeiteinheit zugelieferte Menge an Granulat durch die Zufuhrleitung, also insbesondere der unter dem Entstaubungsbehälter befindliche Zwischenbehälter vollständig gefüllt wird und dessen Füllung in den Entstaubungsbehälter ansteigen würde. Dabei könnte eine zulässige Obergrenze des Füllstandes im Zwischenbehälter ständig überprüft werden.

Dies kann dazu führen, dass ein soeben aus dem Einfüllstutzen, also die Granulat-Einlassöffnung, in den Entstaubungsbehälter fallendes Granulatkorn ohne ein einziges Mal nach oben bewegt zu werden sofort durch die Granulat-Auslassöffnung nach unten in den Zwischenbehälter fällt, und dann die an diesem Granulatkorn anhaftenden Staubpartikel noch nicht vollständig entfernt sind. Die statistische Wahrscheinlichkeit, dass dies eintritt, ist jedoch relativ gering.

Die erfindungsgemäße Vorgehensweise stellt deshalb - sowohl im chargenweisen als auch im kontinuierlichen Betrieb - einen Kompromiss dar zwischen einem hinsichtlich Herstellungskosten der Vorrichtung als auch Energiekosten für die Druckluftversorgung preisgünstigen Entstauben und einem optimalen Entstaubungs-Ergebnis.

Die Ionisierung der Luft sowohl im chargenweisen als auch im kontinuierlichen Betrieb im Entstaubungsbehälter erfolgt so, dass die Ionisier-Spitze eines lonisators in Kontakt mit dem Innenraum des Entstaubungsbehälters steht.

Zwischen dem chargenweisen Betrieb und dem kontinuierlichen Betrieb kann umgeschaltet werden, also beide Betriebsmodi mit der gleichen Vorrichtung betrieben werden, wenn die Steuerung beide Betriebsmodi enthält.

Vorzugsweise wird die Ionisier-Spitze von einem in den Entstaubungsbehälter eingebrachten Gas, insbesondere Luft, umspült und dadurch die vorbeiströmende Luft, die in den Behälter einströmt, ionisiert. Vorzugsweise befindet sich die Ionisier-Spitze in der Mündung einer solchen Zufuhrleitung für Gas. Dies stellt eine besonders effiziente Art der Ionisierung der einzubringenden Luft dar.

Ionisiertes Gas, insbesondere ionisierte Luft, kann an mehreren Stellen eingebracht werden:
- im unteren Bereich des Entstaubungsbehälters durch dessen Umfangswand hindurch, insbesondere möglichst knapp oberhalb der Granulat-Auslassöffnung, insbesondere möglichst knapp oberhalb des Auslass-Konus,
   und/oder
- durch eine separate, also nicht mit den Aufwirbelungs-Düsen vereinigte, Gas-Zufuhröffnung entweder im Auslass-Konus oder an dessen unteren Ende, also auf der Höhe der Granulat-Auslassöffnung oder sogar darunter im Zwischenbehälter
   und/oder
- durch die Wandung eines unter dem Entstaubungsbehälters befindlichen Zwischenbehälters.

Dadurch wird sichergestellt, dass die durch die Aufwirbelungs-Düsen erzeugte Gegenströmung möglichst viel ionisierte Luft enthält.

Einen Sonderfall, insbesondere im chargenweisen Betrieb, stellt der Beginn des Entstaubens einer größeren Menge an Granulat dar:
Dann ist der unter dem Entstaubungsbehälter vorhandene Zwischenbehälter noch leer, und füllt sich erst mit jeder entstaubten und in den Zwischenbehälter herabgefallenen Charge.

Im Normalbetrieb ist der Zwischenbehälter bis hinauf zur Granulat-Auslassöffnung gefüllt. Dann kann die neue zu entstaubende Charge in den Entstaubungsbehälter eingefüllt werden und sitzt auf der Oberfläche des im Zwischen-behälter befindlichen Granulates auf, sodass während des Einfüll-Vorganges noch nicht unbedingt eine Gegenströmung erzeugt werden muss.

Ist der Zwischenbehälter jedoch nicht bis zur Granulat-Auslassöffnung gefüllt, ist dies in der Regel unerlässlich, da sonst die frisch eingefüllten Granulat-Partikel sofort in den Zwischenbehälter durchfallen.

Nach dem Entstauben und/oder dem Entleeren des Entstaubungsbehälters, indem die entstaubte Charge in den Zwischenbehälter gefallen ist, wird der Entstaubungsbehälter gemäß Schritt D) mit ionisierter Luft gespült, wobei vorzugsweise ein Vielfaches des Volumens des Innenraumes des Entstaubungsbehälters an ionisierter Luft eingebracht und über die Luft-Auslassöffnung hinausgedrückt oder abgesaugt wird und dabei an den Innenumfangsflächen des Entstaubungsbehälters anhaftende Staubpartikel abtransportiert oder anhaftende Granulatkörner gelöst werden.

Zur Durchführung eines, insbesondere des bisher beschriebenen, Entstaubungsverfahrens benötigt man eine **Vorrichtung,** die zunächst einmal - wie für chargenweise Entstaubung bekannt - einen Entstaubungsbehälter besitzt, der mindestens eine Granulat-Einlassöffnung und eine Granulat-Auslassöffnung aufweist sowie darüber hinaus eine Luft-Auslassöffnung zum Entfernen, insbesondere Absaugen, der Luft zusammen mit dem zu entfernenden Staub.

Die Granulat-Einlassöffnung und/oder die Luft-Auslassöffnung wird sich vorzugsweise im oberen Bereich, insbesondere in der oberen Hälfte oder im oberen Drittel, befinden, hiervon die Luft-Auslassöffnung vorzugsweise im oberen Deckel des Entstaubungsbehälters. Die Granulat-Auslassöffnung wird sich dagegen im unteren Bereich, insbesondere im unteren Drittel oder vorzugsweise im Boden des Granulat-Entstaubungsbehälters befinden.

Des Weiteren umfasst eine bekannte Entstaubungsvorrichtung eine Aufwirbelungs-Einheit zum Aufwirbeln des Granulates im Entstaubungsbehälter durch Einschießen von Druckluft, sowie eine Steuerung, insbesondere eine elektronische Steuerung, die in der Lage ist, die gesamte Vorrichtung, also insbesondere alle beweglichen Teile, insbesondere Ventile und/oder alle pneumatisch oder elektrisch oder elektronisch funktionierenden Teile der Vorrichtung zu steuern.

Erfindungsgemäß ist an der Granulat-Auslassöffnung jedoch kein aktivierbares und deaktivierbares Verschlusselement vorhanden, sodass diese dauerhaft offen ist. Dies vereinfacht den Aufbau und den Wartungsbedarf der Vorrichtung erheblich.

Weiterhin bestehen die den Entstaubungsbehälter umgebenden Umfangswände zumindest auf den dem Innenraum zugewandten Innenflächen aus einem elektrisch nicht leitfähigen Material, insbesondere Glas. Dadurch werden ionisierte Luftmoleküle, die in den Entstaubungsbehälter eingebracht werden um elektrostatisch aufgeladene Staubpartikel elektrisch zu neutralisieren und die mit den Innenflächen in Kontakt geraten, nicht sofort neutralisiert. Vorzugsweise bestehen die Umfangswände des Entstaubungsbehälters ganz aus Glas, insbesondere einem Stück eines zylindrischen Glasrohres.

Die Aufwirbelungs-Einheit umfasst dabei nach oben gerichtete Aufwirbelungs-Düsen, die mit einem Druckluft-Anschluss in Verbindung stehen und im unteren Teil des Entstaubungsbehälters nahe an der Granulat-Auslassöffnung angeordnet sind, vorzugsweise in einem den unteren Teil des Entstaubungsbehälters bildenden Auslass-Konus, dessen Querschnitt sich nach unten hin verringert, und der aus Metall bestehen kann.

Dadurch kann sich die durch die Aufwirbelungs-Düsen erzeugte von unten nach oben bewegende Gegenströmung oberhalb der Granulat-Auslassöffnung im Bereich des Auslass-Konus verbreitern, wodurch mit zunehmender Verbreiterung automatisch die Strömungsgeschwindigkeit abnimmt, bis sie in einer bestimmten Höhe, dem so genannten Umkehr-Bereich, zu gering ist, um Granulat-Körner entgegen der Schwerkraft zu bewegen oder auf gleich bleibender Höhe zu halten.

Indem der Druck, der an den Aufwirbelungs-Düsen anliegt und/oder der Volumenstrom durch die Düsen gesteuert werden kann, kann gesteuert werden, wie stark und wie hoch das oberhalb der Aufwirbelungs-Düsen vorhandene Granulat im Entstaubungsbehälter hochgewirbelt wird.

Die Aufwirbelungs-Düsen sind dabei so ausgebildet und so mit Druckluft versorgt, dass sie eine Gegenströmung erzeugen können, die die Granulatkörner zumindest in einer Position oberhalb der Granulat-Auslassöffnung schwebend hält, indem sie sie hochwirbelt.

Vorzugsweise weist der verwendete Ionisator eine Ionisier-Spitze auf, die im freien Endbereich einer Gas-Zufuhrleitung, insbesondere einer Luft-Zufuhrleitung, angeordnet ist und in einen Durchbruch in der Wandung des Entstaubungsbehälters hineinragt oder gar durch diesen hindurch in den Innenraum des Entstaubungsbehälters. Der Ionisator ist vorzugsweise an der Außenseite der Wand des Entstaubungsbehälters angeordnet. Vorzugsweise ist nur ein einziger Ionisator vorhanden.

Im Entstaubungsbehälter kann im unteren Bereich, insbesondere oberhalb des Auslasskonus, eine Gas-Zufuhröffnung, insbesondere Luft-Zufuhröffnung, vorhanden sein. Auch die über die Aufwirbelungs-Düsen eingebrachte Luft kann stromaufwärts der Aufwirbelungs-Düsen durch einen Ionisator ionisiert werden. Dadurch kann der Innenraum des Entstaubungsbehälters optimal mit ionisierter Luft geflutet werden.

Die Luft-Auslassöffnung ist vorzugsweise vollständig offen und insbesondere nicht von einem Sieb überdeckt. Dadurch kann das Zusetzen des Siebes mit Staub oder sogenanntem Engelshaar vermieden werden.

Der stromabwärts des Luft-Auslassöffnung anliegende Unterdruck wird so gesteuert, dass er nicht in der Lage ist, Granulat-Körner in die Luft-Auslassöffnung einzusaugen.

Zu diesem Zweck besitzt der Entstaubungsbehälter eine Höhe von mindestens 100 mm, besser mindestens 200 mm, besser mindestens 300 mm, besser mindestens 400 mm, sodass das Hochwirbeln des Granulates in einem ausreichenden Abstand unterhalb der Luft-Auslasses beendet werden kann, also der Umkehrbereich der hochgewirbelten Granulat-Körner immer noch eine ausreichende Strecke über der unteren Granulat-Auslassöffnung liegt, die ausreicht, um den an den Granulatkörnern anhaftenden Staub elektrisch zu neutralisieren und von den Granulat-Körnern zu entfernen.

Die staubbeladene Luft, die durch die Luft-Auslassöffnung hinausgedrückt oder abgesaugt wird, wird einem Staubabscheider, insbesondere einem Filter, zugeführt, der auch weit entfernt von dem Entstaubungsbehälter angeordnet werden kann.

Hierfür ist vorzugsweise ein Unterdruck-Erzeuger, beispielsweise eine sogenannte Druckluft-Ejektor-Düse, vorhanden zwischen der Luft-Auslassöffnung und dem Staubabscheider, oder ein Unterdruck-Erzeuger, insbesondere auch ein Gebläse, stromabwärts des Staubabscheiders. In eine solche allgemein bekannte Druckluft-Ejektor-Düse wird Druckluft eingeströmt, die dadurch die umgebende Luft mitreißt und stromaufwärts der Druckluft-Ejektor-Düse einen Unterdruck, stromabwärts einen Überdruck erzeugt.

Die Vorrichtung umfasst einen in der Zufuhrleitung für Granulat angeordneten Förderstrom-Erzeuger in Form einer bekannten Druckluft-Ejektor-Düse, welche in dem freien Endbereich der Zufuhrleitung, die in Form einer Sauglanze ausgebildet sein kann, angeordnet ist. Dort werden in einem Vorratsbehälter die Granulat-Körner angesaugt und ab dem Förderstrom-Erzeuger mit Überdruck in der Förderleitung zum Entstaubungsbehälter gefördert.

Erfindungsgemäß ist unterhalb der Granulat-Auslassöffnung des Entstaubungsbehälters ein Zwischenbehälter angeordnet, in den das Granulat durch die Granulat-Auslassöffnung herabfallen kann.

Die Vorrichtung umfasst einen, vorzugsweise nur einen, Füllstandssensor im Entstaubungsbehälter und/oder im Zwischenbehälter.

Um auch Granulat-Gemische aus zwei Komponenten herstellen zu können, können an den Entstaubungsbehälter zwei Sauglanzen für verschiedene Vorratsbehälter über je eine Förderleistung angeschlossen sein, die entweder in zwei getrennten Granulat-Einlassöffnungen im Entstaubungsbehälter enden oder deren Förderleitungen noch außerhalb des Entstaubungsbehälters zu einer einzigen Förderleitung und Granulat-Einlassöffnung zusammengeführt werden.

### c) Ausführungsbeispiele

Eine Ausführungsform einer Vorrichtung zum Entstauben eines Granulates gemäß der Erfindung wird im Folgenden beispielhaft anhand der Figuren in verschiedenen Funktionszuständen beschrieben. Es zeigen:
- Figur **1a, b**:: die Vorrichtung beim ersten Befüllen des Zwischenbehälters, dargestellt in der Seitenansicht, teilweise im Vertikalschnitt,
- Figur **2**:: die Vorrichtung beim Befüllen des Entstaubungsbehälters, dargestellt in der Seitenansicht, teilweise im Vertikalschnitt
- Figur **3**:: die Vorrichtung beim Entstauben des im Entstaubungsbehälter befindlichen Granulates,
- Figur **3.1:**: eine Ausschnittvergrößerung aus Figur 3,
- Figur **4**:: die Vorrichtung am Ende des Entstaubungsvorganges,
- Figur **5**:: die Vorrichtung beim Entleeren des Entstaubungsbehälters,
- Figur **6**:: die Vorrichtung beim Spülen des leeren Entstaubungsbehälters,
- Figur **7:**: eine Aufsicht auf den Entstaubungsbehälter.

Das Entstauben des Granulates 4 geschieht chargenweise oder auch kontinuierlich in dem Entstaubungsbehälter 9.

Zunächst wird der chargenweise Betrieb erläutert.

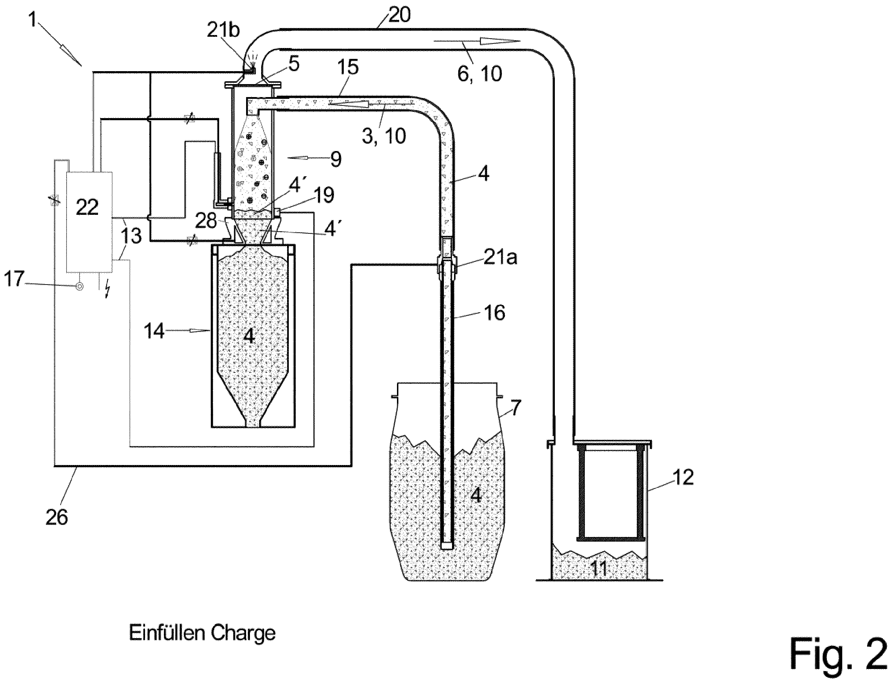

Dabei wird im laufenden chargenweisen Betrieb zunächst gemäß **Figur 2** der Entstaubungsbehälter 9 mit einer Charge 4' aus Granulat 4 gefüllt, wobei der unter dem Entstaubungsbehälter 9 und dessen unterer Granulat-Auslassöffnung 25 angeordnete, oben offene Zwischenbehälter 14 bis zur Granulat-Auslassöffnung 25 hin gefüllt ist, sodass sich die neu in den Entstaubungsbehälter 9 eingebrachte Charge 4' auf der Oberseite der Schüttung des Zwischenbehälter 14 aus Granulat 4 ablagern kann und von dieser abgestützt wird.

Zu diesem Zweck steckt eine Sauglanze 16 in einem Vorrat aus Granulat 4, der sich in einem Vorratsbehälter 7 befindet. Über die an die Sauglanze 16 angeschlossene Förderleitung 15, die mit ihrem anderen Ende in einem Einlassstutzen 24 endet, dessen freies offenes Ende, die Granulat-Einlassöffnung 8, sich im Entstaubungsbehälter 9 befindet, wird das Granulat aus dem Vorratsbehälter 7 mittels der in Strömungsrichtung 10 strömenden Förderluft 3, welche die Granulat-Körner 4 mitreißt, zum Entstaubungsbehälter 9 gedrückt. Dies wird bewirkt durch eine mittels druckluftbetriebene Ejektor-Druckluftdüse 21a in oder nahe der Sauglanze 16.

Der Einlassstutzen 24 ist hier ein gewinkeltes Rohrstück, welches die Wand des Entstaubungsbehälters 9 abgedichtet durchläuft, und dessen freies Ende im Entstaubungsbehälter 9 nach unten weist, so dass das über die Förderleitung 15 zugeführte Granulat 4 nach unten aus der Granulat-Einlassöffnung 8 heraus strömt und auf der Oberseite der Schüttung des Zwischenbehälters 14 liegen bleibt im Höhenbereich oberhalb der Granulat-Auslassöffnung 25, etwa im Höhenbereich des Auslass-Konus 28 und etwas darüber hinaus bis zur Höhenposition des Füllstands-Sensors 19a, der das Abschalten der Anlieferung von Granulat 4 auslöst. Dann wird die Druckluft-Zufuhr zur Ejektor-Druckluftdüse 21a in der Sauglanze 16 beendet.

Während des Füllvorganges verlässt die Förderluft 3 den Entstaubungsbehälter 9 über dessen Luft-Auslassöffnung 18, die in dem Deckel 27 des Entstaubungsbehälters 9 angeordnet ist und die von einem Sieb 5 überspannt sein kann, welches zwar von der Förderluft 3 und darin eventuell enthaltenem Staub 11 durchströmt werden kann, nicht aber von Granulat-Körnern 4.

Von dort strömt die Förderluft 3, jetzt Abluft 6, in Strömungsrichtung 10 entlang einer Staubleitung 20 zu einem Staub-Sammelbehälter 12 und durch einen Abluft-Filter 2, der vorzugsweise in einer Auslassöffnung im Deckel des Staub-Sammelbehälters 12 angeordnet ist, und der für den Staub 11 nicht durchlässig ist.

Die Strömung der Abluft 6 wird optional durch einen Unterdruckerzeuger stromabwärts der Luft-Auslassöffnung 18 bewirkt oder zumindest verstärkt, in diesem Fall wiederum eine Ejektor-Druckluftdüse 21b, die entweder bereits unmittelbar stromabwärts der Luft-Auslassöffnung 18 in der Staubleitung 20 angeordnet ist oder auch erst stromabwärts des Abluft-Filters 2 angeordnet sein kann.

Eine solche Ejektor-Druckluftdüse 21a, b schießt Druckluft - meist entnommen aus einem vorhandenen ortsfesten Druckluft-Netz 17 - in der gewünschten Strömungsrichtung 10 in die jeweilige Transportleitung, und erzeugt dadurch stromaufwärts der Ejektor-Druckluftdüse 21 einen Unterdruck in der Transportleitung und damit eine Strömung der Transportluft in dieser Strömungs-Richtung 10.

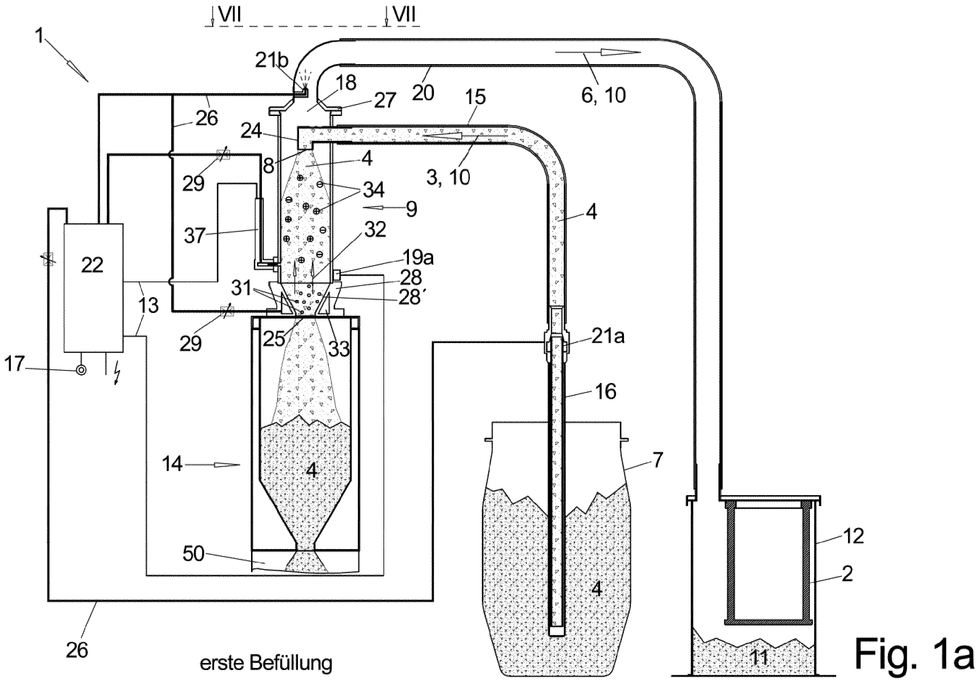

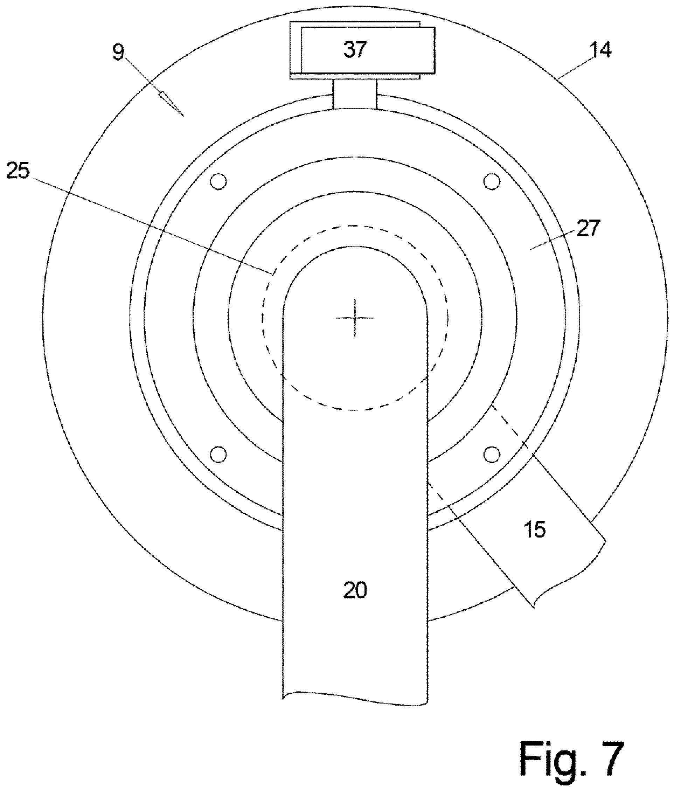

In der Schnittdarstellung der **Figuren 1a bis 6** sowie anhand der Aufsicht der **Figur 7** wird klar, dass der Entstaubungsbehälter 9 ein aufrecht stehender, im wesentlichen zylindrischer Behälter, also mit rotationssymmetrischen Innenumfangs-Wänden, ist, die sich im unteren Bereich zu der vorzugsweise zentrisch darin angeordneten Granulat-Auslassöffnung 25 in Form einer Konusfläche 28' gegeneinander annähern.

Dabei wird die Umfangswand des zylindrischen Teils des Entstaubungsbehälters 9 durch eine Rohrstück aus einem elektrisch nicht leitenden Material, vorzugsweise aus Glas, gebildet, auf dessen offener Oberseite der Deckel 27 sitzt und dessen offene Unterseite auf dem Konus 28 aufsitzt, in dem die innere Konusfläche 28' ausgebildet ist. In dieser Konusfläche 28' münden Aufwirbelungs-Düsen 31, durch die Druckluft in den Innenraum des Entstaubungsbehälters 9 eingeschossen werden kann zum Aufwirbeln des darin befindlichen Granulates 4 welche ebenso wie elektrische Steuersignale und elektrischer Strom den einzelnen Komponenten von einer Steuerung 22 zur Verfügung gestellt wird.

Vorzugsweise umfasst der Auslass-Konus 28 einen konzentrisch zur Granulat-Auslassöffnung 25 angeordneten Ringkanal 33, der einerseits mit der Druckluft-Zufuhr und andererseits mit den Aufwirbelungs-Düsen 31 in Verbindung steht.

Wie **Figur 7** erkennen lässt, kann die Fläche der insbesondere kreisförmigen Granulat-Auslassöffnung 25 wesentlich kleiner wie der innere freie, insbesondere kreisförmige, Querschnitt des Entstaubungsbehälters 9 sein, und der Querschnitt der insbesondere kreisförmigen Granulat-Einlassöffnung 8, also die Mündung am Ende des Einlassstutzens 24, ist in aller Regel ebenfalls kleiner als der innere freie, insbesondere kreisförmige, Querschnitt des Entstaubungsbehälters 9, was jedoch beides keineswegs Bedingung für die Verwirklichung der Erfindung ist.

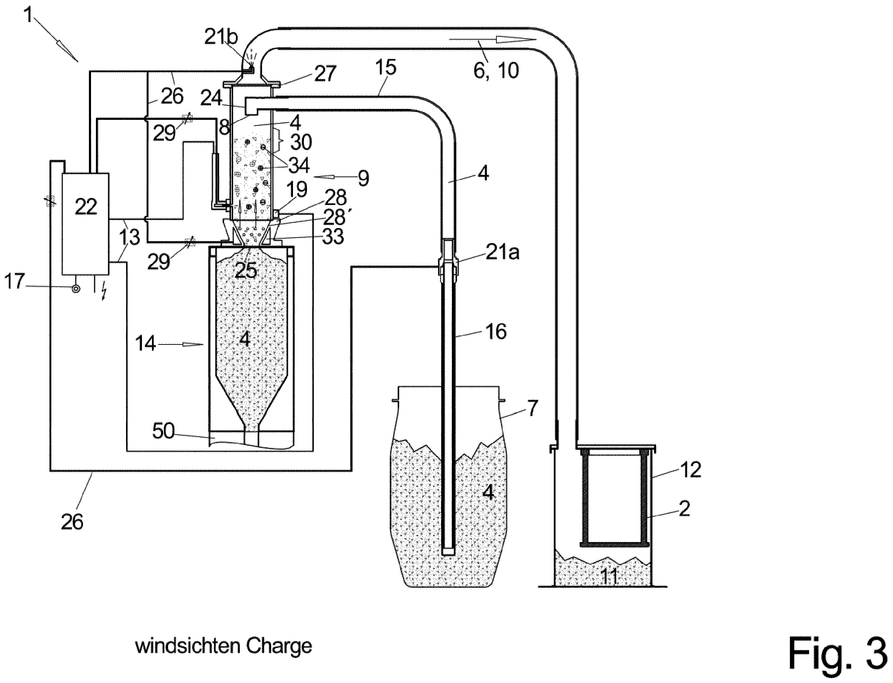

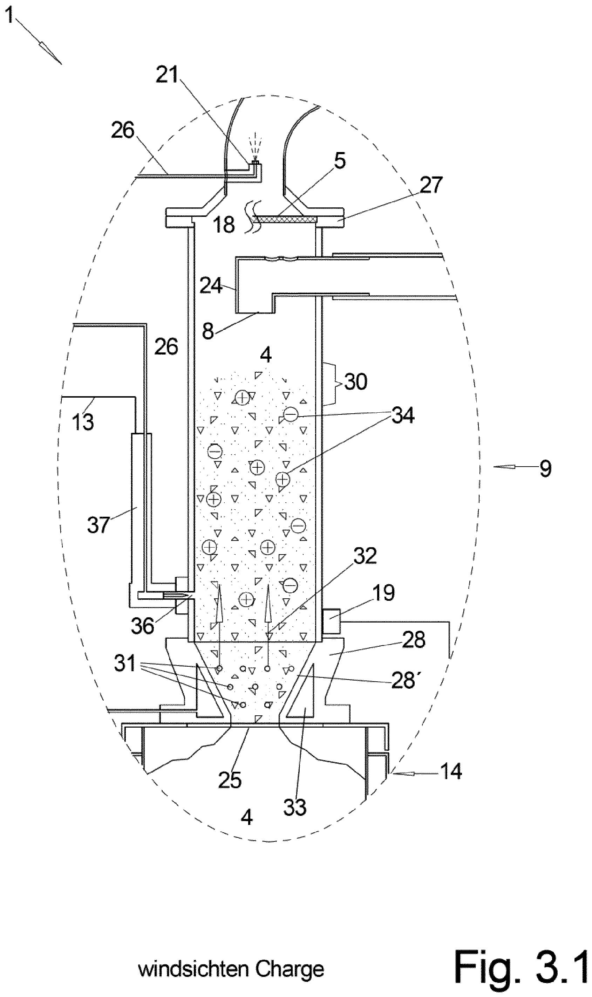

Die im Granulat-Entstaubungsbehälter 9 befindliche Charge wird anschließend entstaubt, wie in **Figur 3** und der Vergrößerung der **Figur 3****.****1** dargestellt:
Zu diesem Zweck wird optional zunächst in der Staubleitung 20 ein Unterdruck erzeugt, also die dortige Ejektor-Druckluftdüse 21b mit Druckluft beaufschlagt.

Über die Gas-Einlassöffnung 36 wird ionisierte Luft in den Entstaubungsbehälter 9 eingebracht, welche die statische Aufladung der Staubpartikel 11 als auch der Granulat-Körner 4 neutralisieren soll. Damit dies gut funktioniert, wird über die Aufwirbelungs-Düsen 31 Druckluft von den Konus-Wänden 28' aus, insbesondere schräg nach oben, in das Innere des Entstaubungsbehälters 9 eingeschossen und dadurch eine entgegen der Schwerkraft gerichtete Gegenströmung 32 erzeugt, die die Granulat-Körner 4 hochwirbelt und vereinzelt, wie in **Figur 3** dargestellt.

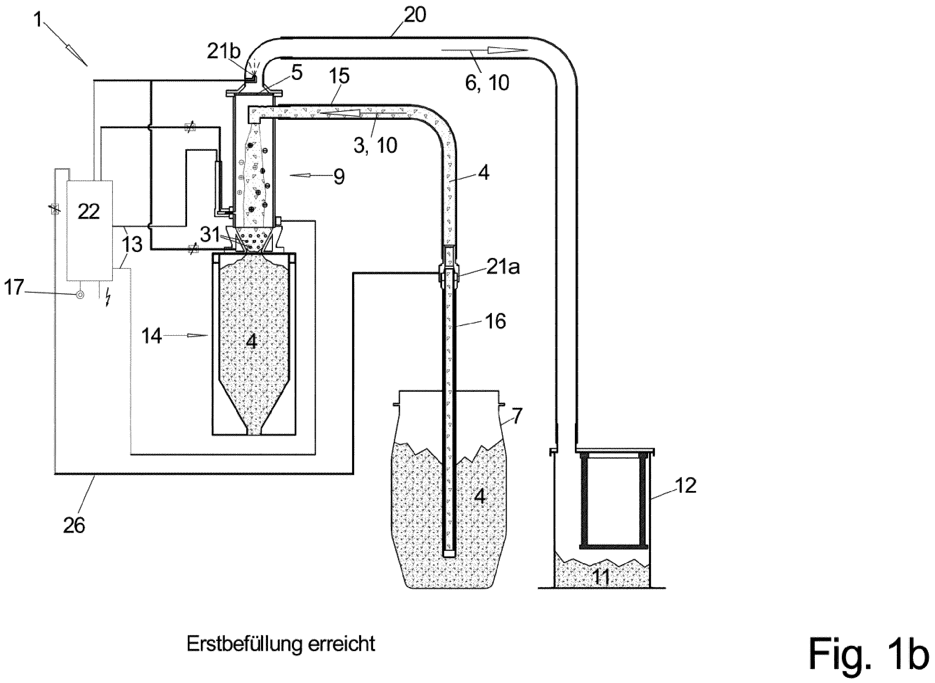

Das Hochwirbeln wird so gesteuert, dass die Granulatkörner 4 ihre Aufwärtsbewegung in einem Umkehrbereich 30 beenden und wieder herabfallen in Richtung Auslass-Konus 28, wobei sich der Umkehrbereich 30 noch unterhalb des Einlassstutzens 24 befindet, um ein Anprallen von Granulatkörnern 4 an dem Einlassstutzen 24 zu vermeiden. Dadurch erreichen die Granulatkörner 4 auch nicht die obere Luft-Auslassöffnung 18 und können von dem dort herrschenden Unterdruck auch nicht in die Abluftleitung 20 gesaugt werden selbst wenn diese gemäß **Figur 1a** nicht von einem Sieb 5 überdeckt ist, also vollständig offen ist, wie es alternativ in **Figur 1b** dargestellt ist.

Vorzugsweise ist über die Steuerung 22 das Einbringen von Druckluft in die Aufwirbelungs-Düsen 31 gekoppelt mit dem Einbringen von Druckluft in die Druckluft-Ejektordüse 21b zum Erzeugen des Unterdruckes in der Staubleitung 20.

Je nach Dauer der Gegenströmung 32 durchlaufen die Granulatkörner 4 also mehrere solcher Umläufe. Vorzugsweise wird die Gegenströmung 32 jedoch mehrfach hintereinander an- und abgeschaltet.

Die Gegenströmung 32 strömt also durch die Charge 4', die zuvor durch die Oberseite der Schüttung im Zwischenbehälter 14 etwa auf Höhe der Granulat-Auslassöffnung 25 nach unten abgestützt war, hindurch und besitzt eine solche Kraft, dass die Granulatkörner 4 mehrheitlich nicht durch die Granulat-Auslassöffnung 25 hindurch nach unten fallen, sondern von der Gegenströmung 32 zumindest in der Mitte des Querschnitts des Granulat-Entstaubungsbehälters 9 mit nach oben transportiert werden, bis die Strömungsgeschwindigkeit in dieser Luftströmung aufgrund der Verbreiterung dieser Gegenströmung 32 nicht mehr ausreicht, um die darin mitgeführten Granulat-Körner 4 weiter anzuheben oder auch nur in diesem angehobenen Zustand zu halten.

Unterhalb der Granulat-Auslassöffnung 25 und damit unterhalb des Entstaubungsbehälters 9 befindet sich der Zwischenbehälter 14, der ebenfalls meistens im Wesentlichen ein aufrecht stehender Zylinder ist. Dieser Zwischenbehälter 14 ist häufig auf der Oberseite eines Verbrauchers 50, etwa einer Spritzguss-Maschine, die nur in **Figur 1a** angedeutet ist, aufgesetzt, und dient als Zwischenspeicher, aus dem - bei geöffneter unterer Öffnung des Zwischenbehälters 14 - das Granulat 4 dem Verbraucher 50 zugeführt wird.

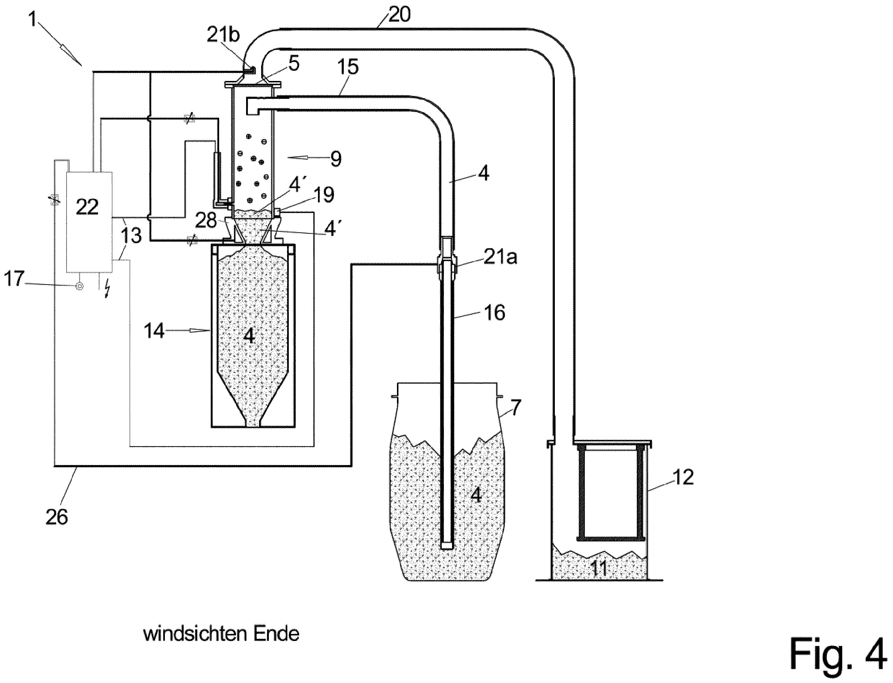

Nachdem dieses Entstauben des Granulats eine ausreichende Zeit lang durchgeführt wurde, wird es beendet, sodass sich gemäß **Figur 4** die nun entstaubte Granulat-Charge 4' wieder im unteren Bereich des Entstaubungsbehälters 9, insbesondere im Bereich des Auslass-Konus 28, ansammelt.

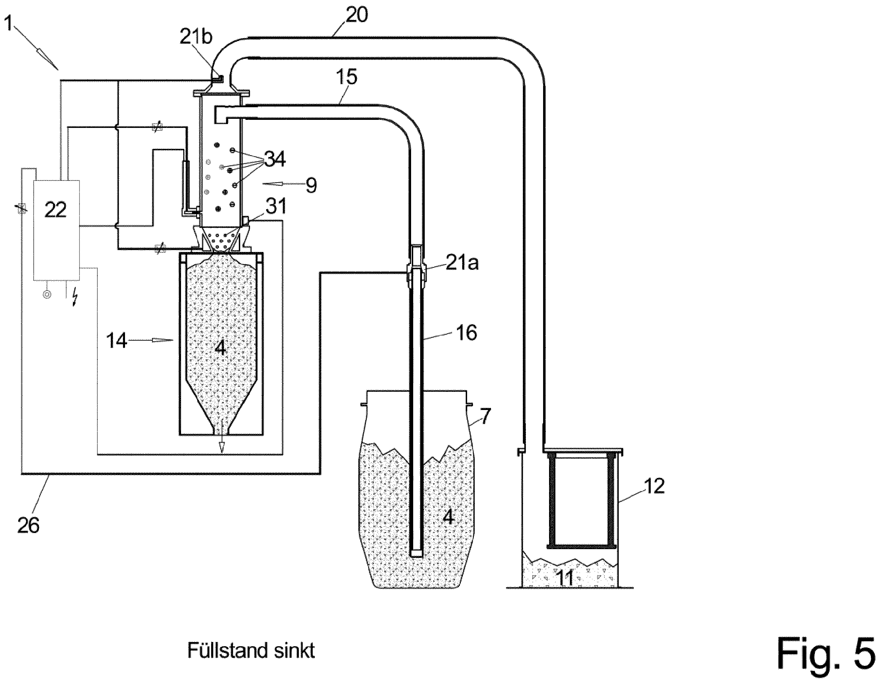

Sobald sich aufgrund eines Verbrauchs von Granulat 4 durch den Verbraucher 50 der Füllstand im Zwischenbehälter 14 so weit gesenkt hat, dass die Oberseite der Schüttung beispielsweise die untere Granulat-Auslassöffnung 25 erreicht hat, wie in **Figur 5** dargestellt, kann erneut eine Charge 4' an Granulat 4 in den Entstaubungsbehälter 9 eingebracht und entstaubt werden, wie vorstehend anhand der **Figuren 2** **und** **3** erläutert.

In der Praxis wird eine neue Charge 4' eingefüllt, sobald der Füllstands-Sensor 19 keinen Füllstand auf seiner Höhe mehr erkennen kann, und ab diesem Zeitpunkt eine vorgegebene Wartezeit verstrichen ist. Dadurch wird kein weiterer Füllstands-Sensor benötigt.

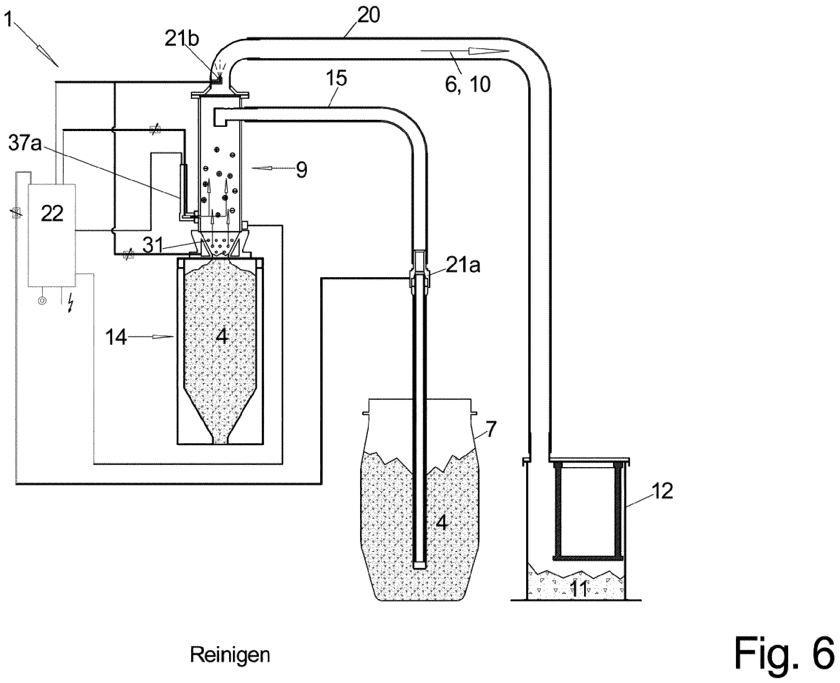

Vorzugsweise wird jedoch vor dem Einbringen einer neuen Charge 4' der nun leere Entstaubungsbehälter 9 zuerst von dem vor allem an den Innenseiten seiner Wände abgelagerten Staub 11 befreit, wie anhand der **Figur 6** erkennbar.

Zu diesem Zweck wird der Entstaubungsbehälter 9 mit ionisierter Luft 34 gespült mit vorzugsweise einem Vielfachen des Volumens des Entstaubungsbehälters 9, also über die Luft-Einlassöffnung 36, der ein Ionisator 37 vorgelagert ist, ionisierte Luft 34 eingebracht und über den in der Abluftleitung 20 herrschenden Unterdruck abgesaugt.

In der jeweiligen Druckluftleitung 26 von der Steuerung 22 zu der jeweiligen Luft-Einlassöffnung 36 kann jeweils ein Druck-Regelventil 29 vorhanden sein.

Alle beschriebenen Vorgänge werden von einer zentralen Steuerung 22 gesteuert:
Diese versorgt über Druckluftleitungen 26 gesteuert hinsichtlich Druck und/oder Menge und/oder Zeit mit Druckluft
- die wenigstens eine Ejektor-Druckluftdüse 21a in der wenigstens einen Sauglanze 16,
- die Luft-Zufuhröffnung 36,
- die optional vorhandene wenigstens eine Ejektor-Druckluftdüse 21b zwecks Erzeugung von Unterdruck in der Staubleitung 20.

Des Weiteren steht die Steuerung über Elektroleitungen 13 mit allen vorhandenen Füllstands-Sensoren 19a, b am Entstaubungsbehälter 9 sowie am Zwischenbehälter 14 in signaltechnischer Verbindung, um abhängig von deren Messsignalen beispielsweise den Einfüllvorgang zum richtigen Zeitpunkt zu beenden.

Zusätzlich wird der Ionisator 37 von der Steuerung 22 auch mit elektrischem Strom versorgt und angesteuert.

Um in dem Zwischenbehälter 14 einen solchen Füllstand zu erreichen, der bei einem chargenweisen Betrieb die nächste in den Entstaubungsbehälter 9 eingebrachte Charge 4' abstützt, muss am Beginn des gesamten EntstaubungsVorganges zunächst dieser Zwischenbehälter 14 erstmals gefüllt werden, wie in den **Figuren 1a**, **b** dargestellt:
Dabei wird durch Aktivieren der Ejektor-Druckluftdüse 21a in der Sauglanze 16 Granulat 4 über die Granulat-Einlassöffnung 8 in den Entstaubungsbehälter 9 eingebracht, während gleichzeitig sowohl die Ejektor-Druckluftdüse 21b in der Abluftleitung 20 Unterdruck erzeugt und über die Aufwirbelungs-Düsen 31 Druckluft eingeschossen und eine nach oben gerichtete Gegenströmung 32 entgegen der Fallrichtung der Granulat-Partikel 8 erzeugt wird.

Dadurch werden die vom Einlassstutzen 24 herabfallenden Granulat-Körner 4 auf ihrem Weg nach unten zur Granulat-Auslassöffnung 25 teilweise entstaubt.

Je nach Einstellung des Druckes und/oder Volumenstromes durch die Aufwirbelungs-Düsen 31, also je nach Stärke der Gegenströmung 32, wird ein größerer oder kleinerer Teil der Granulat-Körner 4, die aus dem Einfüllstutzen 24 fallen, nicht sofort durch die Granulat-Auslassöffnung 25 fallen, sondern zunächst ein oder zweimal hochgewirbelt werden und dadurch besser entstaubt werden, bevor sie nach unten in den Zwischenbehälter 14 fallen.

Die Stärke der Gegenströmung 32 kann also abhängig von der gewünschten Entstaubungs-Qualität eingestellt werden und/oder abhängig von der von dem Verbraucher 50 pro Zeiteinheit verbrauchten Menge an Granulat 4.

Für den chargenweisen Betrieb wird angestrebt, den Füllstand im Zwischen-behälter 14 ansteigen zu lassen bis zur Höhe der Granulat-Auslassöffnung 25 des Entstaubungsbehälters 9 gemäß **Figur 1b**, um dann mit dem chargenweisen Entstauben beginnen zu können, wobei sich der Füllstand nach dem Entstauben einer Charge 4' vorzugsweise wieder auf dieser Höhe befinden sollte. Allerdings kann der Verbrauch an Granulat 4 durch den stromabwärts angeordneten Verbraucher in der Regel nicht beeinflusst werden, und dieses Ziel nur erreicht werden durch eine analoge Zuförderung von Granulat in den Entstaubungsbehälter 9 und Entstauben von Granulat.

Jedoch kann auf diese Art und Weise auch ein kontinuierlicher Betrieb mit dieser Vorrichtung gefahren werden, indem die Gegenströmung 32 und ebenso das - vorzugsweise durchgehend stattfindende - Einfüllen von Granulat in den Entstaubungsbehälter 9 so eingestellt wird, dass die Oberfläche der Schüttung an Granulat 4 im Zwischenbehälter 14 nie dessen unteres Ende erreicht, aber vorzugsweise auch nicht über die Granulat-Auslassöffnung 25 des Entstaubungsbehälters 9 ansteigt.

### BEZUGSZEICHENLISTE

- **1**: Vorrichtung zum Entstauben
- **2**: Abluft-Filter
- **3**: Förderluft
- **4**: Granulat, Granulat-Ansammlung, Granulat-Korn
- **4'**: Charge
- **5**: Sieb
- **6**: Abluft
- **7**: Vorratsbehälter
- **8**: Granulat-Einlassöffnung
- **9**: Entstaubungsbehälter
- **10**: Strömungsrichtung
- **11**: Staub
- **12**: Staub-Sammelbehälter
- **13**: Elektroleitung
- **14**: Zwischenbehälter
- **15**: Förderleitung
- **16**: Sauglanze
- **17**: Druckluftquelle
- **18**: Luft-Auslassöffnung
- **19**: Füllstandssensor
- **20**: Staubleitung
- **21a, b**: Ejektor-Druckluftdüse, Unterdruck-Erzeuger
- **22**: Steuerung
- **23 24**: Einlassstutzen
- **25**: Granulat-Auslassöffnung
- **26**: Druckluftleitung
- **27**: Deckel
- **28**: Auslass-Konus
- **28'**: Konusfläche
- **29**: Druck-Regelventil
- **30**: Umkehrbereich
- **31**: Aufwirbelungs-Düse
- **32**: Gegenströmung
- **33**: Ringkanal
- **34**: ionisiertes Gas
- **36**: Gas-Zufuhröffnung
- **37**: Ionisator

- **50**: Verbraucher

## Patentansprüche

1. **Vorrichtung** (1) zum chargenweisen Entstauben eines Granulates (4), mit einem stromaufwärts des Entstaubungsbehälters (9) angeordneten Förderstrom-Erzeuger in Form einer Ejektor-Druckluftdüse (21a) mit einem Druckluftanschluss und einem Entstaubungsbehälter (9), der aufweist
- mindestens eine Granulat-Einlassöffnung (8) für das Granulat (4),
- eine Granulat-Auslassöffnung (25) im unteren Teil des Entstaubungsbehälters (9), insbesondere in dessen Boden,
- eine Luft-Auslassöffnung (18), die insbesondere im oberen Teil des Entstaubungsbehälters (9) angeordnet ist,
- einen Ionisator (37),
- eine Aufwirbelungs-Einheit zum Aufwirbeln des Granulates (4) im Entstaubungsbehälter (9),
- eine Steuerung (22), die in der Lage ist, die Aufwirbelungs-Einheit und alle beweglichen Teile, insbesondere Ventile, der Vorrichtung zu steuern,
- wobei unterhalb der Granulat-Auslassöffnung (25) des Entstaubungsbehälters (9) ein Zwischenbehälter (14) angeordnet ist, in den das Granulat durch die Granulat-Auslassöffnung (25) herabfallen kann, und ein über Elektroleitungen (13) mit der Steuerung (22) signaltechnisch verbundener Füllstands-Sensor im Zwischenbehälter (14) angeordnet ist,
- wobei die den Entstaubungsbehälter (9) umgebenden Umfangswände zumindest auf den dem Innenraum zugewandten Innenflächen aus einem elektrisch nicht leitfähigen Material, insbesondere Glas, beste-hen,
**dadurch gekennzeichnet, dass**
-- die verschlusslose Granulat-Auslassöffnung (25) dauerhaft offen ist,
- die Aufwirbelungs-Einheit nach oben gerichtete Aufwirbelungs-Düsen (31), die mit einem Druckluft-Anschluss in Verbindung stehen, im unteren Teil des Entstaubungsbehälters (9), insbesondere in der Granulat-Auslassöffnung (25), aufweist,
- wobei, wenn der vom Füllstands-Sensor gemessene Füllstand im Zwischenbehälter (14) bis zur Höhe der Granulat-Auslassöffnung (25) des Entstaubungsbehälters (9) ansteigt, die Steuerung (22) das chargenweise Entstauben einleitet.

2. Vorrichtung nach Anspruch 1,
**dadurch gekennzeichnet, dass**
- der Querschnitt des Entstaubungsbehälters (9) sich im unteren Teil zur Granulat-Auslassöffnung (25) hin in Form einer Konusfläche (28') verringert,
- die Druckluft-Düsen (31) in der Konusfläche (28') angeordnet sind.

3. Vorrichtung nach einem der vorhergehenden Ansprüche,
**dadurch gekennzeichnet, dass**
- die Aufwirbelungs-Düsen (31) hinsichtlich Druck und/oder Strömungsgeschwindigkeit und/oder Volumenstrom steuerbar sind, insbesondere durch die Steuerung (22) steuerbar sind,
und/oder
- der Ionisator (37) eine Ionisier-Spitze umfasst, die im freien Endbereich einer Luft-Zufuhrleitung angeordnet ist und in eine Gas-Zufuhröffnung (36) in der Wandung des Entstaubungsbehälters (9) oder gar in den Innenraum des Entstaubungsbehälters (9) hineinragt.

4. Vorrichtung nach einem der vorhergehenden Ansprüche,
**dadurch gekennzeichnet, dass**
die Gas-Zufuhröffnung (36) mit daran angeschlossenem Ionisator (37)
- entweder im unteren Bereich des Entstaubungsbehälters (9), insbesondere oberhalb des Auslass-Konus (28) oder im Auslass-Konus (28), insbesondere in oder an einer Gas-Zufuhröffnung (36), angeordnet ist
- oder unterhalb der Granulat-Auslassöffnung (25) im zwischen Behälter (14), insbesondere in dessen oberen Bereich, angeordnet ist.

5. Vorrichtung nach einem der vorhergehenden Ansprüche,
**dadurch gekennzeichnet, dass**
- die Luft-Auslassöffnung (18) dauerhaft und insbesondere vollständig offen ist, insbesondere nicht von einem Sieb (5) überdeckt ist,
und/oder
- die Höhe des Entstaubungsbehälters (9) mindestens 100 mm, besser mindestens 200 mm, besser mindestens 300 mm besser mindestens 400 mm beträgt,
und/oder
- die Umfangswand des Entstaubungsbehälters (9) ein aufrecht stehendes, oben und unten offenes, Glasrohr ist, insbesondere mit einem rotationssymmetrischen Querschnitt, und der Querschnitt insbesondere über die gesamte Länge unverändert ist.

6. Vorrichtung nach einem der vorhergehenden Ansprüche,
**dadurch gekennzeichnet, dass**
- die Vorrichtung einen Staubabscheider, insbesondere einen Abluft-Filter (2), und/oder einen Unterdruck-Erzeuger, insbesondere eine Ejektor-Druckluftdüse (21b) umfasst, der stromabwärts des Entstaubungsbehälters (9) angeordnet ist,
und/oder
- die Granulat-Einlassöffnung (8) in der oberen Hälfte, insbesondere im oberen Drittel, der Höhe des Entstaubungsbehälters (9) angeordnet ist.

7. Vorrichtung nach einem der vorhergehenden Ansprüche,
**dadurch gekennzeichnet, dass**
- die Aufwirbelungs-Düsen (31) in der Lage sind, eine solche nach oben gerichtete Gegenströmung (32) zu erzeugen, dass die dadurch hochgewirbelten Granulat-Körner (4) mehrheitlich schwerkraftbedingt ihre Aufwärtsbewegung beenden, bevor sie die obere Luft-Auslassöffnung (18) erreichen,
und/oder
- die Steuerung (22) Betriebsmodi für den chargenweisen Betrieb und den kontinuierlichen Betrieb aufweist und die Steuerung zwischen diesen beiden Betriebsmodi umgeschaltet werden kann,
und/oder
- unterhalb der Granulat-Auslassöffnung (25) ein Zwischenbehälter (14) an der Unterseite des Entstaubungsbehälters (9) angeordnet ist.

8. Vorrichtung nach einem der vorhergehenden Ansprüche,
**dadurch gekennzeichnet, dass**
- der Entstaubungsbehälter (9) mehrere Granulat-Einlassöffnungen (8) aufweist, die jeweils über eine Förderleitung (15) mit einer Sauglanze (16) in Verbindung stehen, in der eine Ejektor-Druckluftdüse (21a) angeordnet ist,
oder
- der Entstaubungsbehälter (9) nur eine Granulat-Einlassöffnung (8) aufweist, deren Förderleitung (15) außerhalb des Entstaubungsbehälters (9) eine Verzweigung zu zwei Sauglanzen (16) aufweist, in denen jeweils eine Ejektor-Druckluftdüse (21a) angeordnet ist.

9. **Verfahren** zum chargenweisen Entstauben eines Granulates (4) mittels einer Vorrichtung nach einem der vorhergehenden Ansprüche, wodurch insbesondere der an den Granulat-Körner (4) anhaftende Staub (11) entfernt werden soll und wobei,
A) wenn der Füllstand des unterhalb der Granulat-Auslassöffnung (25) angeordneten Zwischenbehälters (14) die Höhe der Granulat-Auslassöffnung (25) erreicht, mit oder ohne Gegenströmung im Entstaubungsbehälter (9) in diesen Granulat eingefüllt wird bis zu einem vorgegebenen Füllstand.
B) bei Erreichen des Füllstandes der Einfüllvorgang beendet wird,
C) das Entstauben der eingefüllten Charge (4') im Entstaubungsbehälter (9) mittels eingebrachtem ionisierten Gas, insbesondere ionisierter Luft, und Hochwirbeln der Granulat-Körner (4) durch eine Gegenströmung (32) sowie Hinausbefördern, insbesondere Absaugen, des staubbeladenen Gases durchgeführt wird,
D) der Entstaubungsbehälter (9) durch Spülen mit einem ionisierten Gas, insbesondere ionisierter Luft, gereinigt wird,
E) nach Absinken des Füllstandes unter den vorgegebenen Füllstand zumindest die Schritte A) bis C) sowie E) erneut durchgeführt werden.

10. Verfahren nach Anspruch 9,
**dadurch gekennzeichnet, dass**
im Schritt A)
- die Stärke der Gegenströmung (32) durch Steuern der Aufwirbelungs-Düsen (31) hinsichtlich Druck und/oder Strömungsgeschwindigkeit und/oder Volumenstrom eingestellt wird,
oder
- die Gegenströmung (32) durch, insbesondere nur durch, das im unteren Bereich des Entstaubungsbehälters (9) eingebrachte ionisierte Gas bewirkt wird.

11. Verfahren nach einem der vorhergehenden Verfahrens-Ansprüche,
**dadurch gekennzeichnet, dass**
- das Absaugen des staubbeladenen Gases aus dem Entstaubungsbehälter (9) und das Einbringen von Luft über die Aufwirbelungs-Düsen (31) gleichzeitig, insbesondere immer nur gleichzeitig, durchgeführt wird,
und/oder
- im Schritt C) das Hochwirbeln der Granulat-Körner (4) mehrfach hintereinander durchgeführt wird.

12. Verfahren nach einem der vorhergehenden Verfahrens-Ansprüche,
**dadurch gekennzeichnet, dass**
- die Granulat-Auslassöffnung (25) in keinem Betriebszustand von einem an der Vorrichtung befestigten Verschlusselement verschlossen wird,
und/oder
- im Schritt A) und/oder C) die Granulatkörner (4) die obere Luft-Auslassöffnung (18), insbesondere auch den Einfüllstutzen (24), mehrheitlich nicht erreichen.

13. Verfahren nach einem der vorhergehenden Verfahrens-Ansprüche,
**dadurch gekennzeichnet, dass**
- nach dem Absinken des Füllstandes gemäß Schritt E) der Einfüll-Vorgang gemäß Schritt A) erst nach einem vorgegebenen Zeitversatz begonnen wird,
und/oder
- wahlweise, insbesondere mittels der gleichen Vorrichtung, im chargenweisen oder im kontinuierlichen Betrieb vorgegangen werden kann und insbesondere die Steuerung (22) der Vorrichtung zwischen einem chargenweisen Betrieb und einem kontinuierlichen Betrieb umgeschaltet werden kann.

14. Verfahren nach einem der vorhergehenden Verfahrens-Ansprüche,
**dadurch gekennzeichnet, dass**
- durch die Stärke der Gegenströmung (32) die Höhenlage des Umkehrbereiches (30), bis zu der das Granulat (4) hochgewirbelt wird, einstellbar ist,
und/oder
- das Spülen gemäß Schritt D) erst begonnen wird, nach dem das Entstauben gemäß Schritt C) beendet ist, insbesondere nach dem gemäß Schritt e) der Füllstand unter den vorgegebenen Füllstand gesunken ist.

15. Verfahren nach einem der vorhergehenden Verfahrens-Ansprüche,
**dadurch gekennzeichnet, dass**
- beim Spülen gemäß Schritt D) ein vielfaches Volumen des gesamten Entstaubungsbehälters (9) an ionisiertem Gas (34) eingebracht wird,
und/oder
- das Gas (34), welches inzwischen zumindest teilweise nicht mehr ionisiert ist, aus dem Entstaubungsbehälter (9) laufend entfernt wird, insbesondere durch absaugen.

16. Verfahren nach einem der vorhergehenden Verfahrens-Ansprüche,
**dadurch gekennzeichnet, dass**
nach dem Entstauben einer Granulat-Charge (4') die Gegenströmung (32) beendet oder wenigstens soweit reduziert wird, dass das im Entstaubungsbehälter (9) befindliche Granulat-(4) durch die Granulat-Auslassöffnung (25) nach unten herausfällt.

17. Verfahren nach einem der vorhergehenden Verfahrens-Ansprüche,
**dadurch gekennzeichnet, dass**
- das Granulat (4) mittels Druckluft zum Entstaubungsbehälter (9) transportiert wird
und/oder
- der Staub (11) aus dem Entstaubungsbehälter (9) mittels Saugluft entfernt wird.

18. Verfahren nach einem der vorhergehenden Verfahrens-Ansprüche,
**dadurch gekennzeichnet, dass**
die Ionisier-Spitze des Ionisators (37) von einem in den Entstaubungsbehälter (9) einzubringenden Gas, insbesondere Luft, umströmt wird.

19. Verfahren nach einem der vorhergehenden Verfahrens-Ansprüche,
**dadurch gekennzeichnet, dass**
ionisiertes Gas, insbesondere ionisierte Luft,
- im unteren Bereich des Entstaubungsbehälters (9), insbesondere oberhalb des Auslass-Konus (28) oder durch den Auslass-Konus (28),
oder
- unterhalb der Granulat-Auslassöffnung (25) in den Zwischen-Behälter (14) hinein
zugeführt wird.

## Claims

1. **Device** (1) for the batchwise dedusting of a granulate (4), with a conveying flow generator arranged upstream of the dedusting container (9) in the form of an ejector compressed air nozzle (21a) with a compressed air connection and a dedusting container (9), which comprises
- at least one granulate inlet opening (8) for the granulate (4),
- a granulate outlet opening (25) in the lower part of the dedusting container (9), in particular in its base,
- an air outlet opening (18) which is arranged in particular in the upper part of the dedusting container (9),
- an ioniser (37),
- a whirling unit for whirling the granulate (4) in the dedusting container (9),
- a controller (22) which is able to control the whirling unit and all moving parts, in particular valves, of the device,
- wherein an intermediate container (14) is arranged below the granulate outlet opening (25) of the dedusting container (9), into which the granulate can fall through the granulate outlet opening (25), and a level sensor connected to the controller (22) via electrical lines (13) is arranged in the intermediate container (14),
- wherein the peripheral walls surrounding the dedusting container (9) consist of an electrically non-conductive material, in particular glass, at least on the inner surfaces facing the interior,
**characterised in that**
- the closure-less granulate outlet opening (25) is permanently open,
- the whirling unit has upwardly directed whirling nozzles (31) which are connected to a compressed air connection in the lower part of the dedusting container (9), in particular in the granulate outlet opening (25),
- whereby, when the filling level in the intermediate container (14) measured by the filling level sensor rises to the level of the granulate outlet opening (25) of the dedusting container (9), the controller (22) initiates batchwise dedusting.

2. Device according to claim 1,
**characterised in that**
- the cross-section of the dedusting container (9) decreases in the lower part towards the granulate outlet opening (25) in the form of a conical surface (28'),
- the compressed air nozzles (31) are arranged in the conical surface (28').

3. Device according to one of the preceding claims,
**characterised in that**
- the whirling nozzles (31) can be controlled as regard pressure and/or flow rate and/or volume flow, in particular can be controlled by the controller (22),
and/or
- the ioniser (37) comprises an ionising tip which is arranged in the free end region of an air supply line and protrudes into a gas supply opening (36) in the wall of the dedusting container (9) or even into the interior of the dedusting container (9).

4. Device according to one of the preceding claims,
**characterised in that**
the gas supply opening (36) with the ioniser (37) connected thereto
- is arranged either in the lower region of the dedusting container (9), in particular above the outlet cone (28) or in the outlet cone (28), in particular in or on a gas supply opening (36),
- or is arranged below the granulate outlet opening (25) in the intermediate container (14), in particular in its upper region.

5. Device according to one of the preceding claims,
**characterised in that**
- the air outlet opening (18) is permanently and in particular is completely open, in particular is not covered by a sieve (5),
and/or
- the height of the dedusting container (9) is at least 100 mm, better at least 200 mm, better at least 300 mm, better at least 400 mm,
and/or
- the peripheral wall of the dedusting container (9) is an upright glass tube open at the top and bottom, in particular having a rotationally symmetrical cross-section, and the cross-section is in particular unchanged over the entire length.

6. Device according to one of the preceding claims,
**characterised in that**
- the device comprises a dust separator, in particular an exhaust air filter (2), and/or a vacuum generator, in particular an ejector compressed air nozzle (21b), which is arranged downstream of the dedusting container (9),
and/or
- the granulate inlet opening (8) is arranged in the upper half, in particular in the upper third, of the height of the dedusting container (9).

7. Device according to one of the preceding claims,
**characterised in that**
- the whirling nozzles (31) are able to generate such an upwardly directed counterflow (32) that the granulate grains (4) whirled up thereby stop their upward movement mainly due to gravity before they reach the upper air outlet opening (18),
and/or
- the controller (22) has operating modes for batchwise operation and continuous operation and the controller can be switched between these two operating modes
and/or
- an intermediate container (14) is arranged on the underside of the dedusting container (9) below the granulate outlet opening (25).

8. Device according to one of the preceding claims,
**characterised in that**
- the dedusting container (9) has multiple granulate inlet openings (8), each of which is connected via a conveyor line (15) to a suction lance (16) in which is arranged an ejector compressed air nozzle (21a)
or
- the dedusting container (9) has only one granulate inlet opening (8), the conveyor line (15) of which has a branch outside the dedusting container (9) to two suction lances (16), in each of which is arranged an ejector compressed air nozzle (21a).

9. **Method** for the batchwise dedusting of a granulate (4) by means of a device according to one of the preceding claims, wherein in particular the dust (11) adhering to the granulate grains (4) is to be removed and wherein,
A) when the filling level of the intermediate container (14) arranged below the granulate outlet opening (25) reaches the height of the granulate outlet opening (25), granulate is filled into the dedusting container (9) with or without counterflow in the dedusting container up to a predetermined filling level.
B) when the filling level is reached, the filling process is terminated,
C) the dedusting of the filled batch (4') in the dedusting container (9) is carried out by means of introduced ionised gas, in particular ionised air, and whirling up of the granulate grains (4) by a counter-current (32) and outward conveyance, in particular suctioning off, of the dust-laden gas,
D) the dedusting container (9) is cleaned by flushing with an ionised gas, in particular ionised air,
E) after the filling level drops below the specified filling level, at least the steps A) to C) and E) are repeated.

10. Method according to claim 9,
**characterised in that**
in step A)
- the strength of the counterflow (32) is adjusted by controlling the whirling nozzles (31) as regards pressure and/or flow rate and/or volume flow,
or
- the counterflow (32) is effected by, in particular only by, the ionised gas introduced in the lower region of the dedusting container (9).

11. Method according to one of the preceding method claims, **characterised in that**
- the suctioning of the dust-laden gas from the dedusting container (9) and the introduction of air via the whirling nozzles (31) is carried out simultaneously, in particular always only simultaneously,
and/or
- in step C) the whirling up of the granulate grains (4) is carried out several times in succession.

12. Method according to one of the preceding method claims,
**characterised in that**
- the granulate outlet opening (25) is not closed by a closure element attached to the device in any operating state,
and/or
- in step A) and/or C) the majority of the granulate grains (4) do not reach the upper air outlet opening (18), in particular also the filling neck (24).

13. Method according to one of the preceding method claims,
**characterised in that**
- after the filling level has dropped according to step E), the filling process according to step A) is started only after a predetermined time delay,
and/or
- as desired, either batchwise or continuous operation can be employed, in particular using the same device, and in particular the controller (22) of the device can be switched between batchwise operation and continuous operation.

14. Method according to one of the preceding method claims,
**characterised in that**
- the height of the reversal region (30) up to which the granulate (4) is whirled can be adjusted by the strength of the counterflow (32),
and/or
- the flushing according to step D) is only started after the dedusting according to step C) has ended, in particular after the filling level has fallen below the predetermined filling level according to step E).

15. Method according to one of the preceding method claims,
**characterised in that**
- during flushing according to step D), a multiple volume of the entire dedusting container (9) of ionised gas (34) is introduced,
and/or
- the gas (34), which meanwhile is at least partially no longer ionised, is continuously removed from the dedusting container (9), in particular by suction.

16. Method according to one of the preceding method claims,
**characterised in that**
after the dedusting of a granulate batch (4'), the counterflow (32) is terminated or at least reduced to such an extent that the granulate (4) present in the dedusting container (9) falls downwards through the granulate outlet opening (25).

17. Method according to one of the preceding method claims,
**characterised in that**
- the granulate (4) is transported to the dedusting container (9) by means of compressed air
and/or
- the dust (11) is removed from the dedusting container (9) by means of suction air.

18. Method according to one of the preceding method claims,
**characterised in that**
a gas, in particular air, to be introduced into the dedusting container (9) flows around the ionising tip of the ioniser (37).

19. Method according to one of the preceding method claims,
**characterised in that**
ionised gas, in particular ionised air,
- is fed in the lower region of the dedusting container (9), in particular above the outlet cone (28) or through the outlet cone (28)
or
- below the granulate outlet opening (25), into the intermediate container (14).

## Revendications

1. **Un dispositif** (1) pour le dépoussiérage par lots d'un granulat (4), avec un générateur de flux de transport disposé en amont du récipient de dépoussiérage (9) sous la forme d'une buse d'éjection d'air comprimé (21a) avec un raccord d'air comprimé et un récipient de dépoussiérage (9), qui présente
- au moins une ouverture d'entrée de granulat (8) pour le granulat (4),
- une ouverture de sortie de granulat (25) dans la partie inférieure du récipient de dépoussiérage (9), en particulier dans son fond,
- une ouverture de sortie d'air (18) qui est disposée en particulier dans la partie supérieure du récipient de dépoussiérage (9),
- un ionisateur (37),
- une unité de dispersion pour disperser le granulat (4) dans le récipient de dépoussiérage (9),
- une commande (22) capable de commander l'unité de dispersion et toutes les pièces mobiles, en particulier les soupapes, du dispositif,
- dans lequel un récipient intermédiaire (14) est disposé en dessous de l'ouverture de sortie de granulat (25) du récipient de dépoussiérage (9), récipient intermédiaire dans lequel les granulat peut tomber par l'ouverture de sortie de granulat (25), et un capteur de niveau de remplissage relié par des câbles électriques (13) à la commande (22) est disposé dans le récipient intermédiaire (14),
- dans lequel les parois périphériques entourant le récipient de dépoussiérage (9) sont constituées d'un matériau non conducteur d'électricité, en particulier de verre, au moins sur les surfaces intérieures tournées vers l'intérieur,
**caractérisé en ce que**
- l'ouverture de sortie de granulat (25) sans fermeture est ouverte en permanence,
- l'unité de dispersion comporte des buses de dispersion (31) dirigées vers le haut, qui sont reliées à un raccord d'air comprimé, dans la partie inférieure du récipient de dépoussiérage (9), en particulier dans l'ouverture de sortie de granulat (25),
- dans lequel, lorsque le niveau de remplissage mesuré par le capteur de niveau dans le récipient intermédiaire (14) monte jusqu'à la hauteur de l'ouverture de sortie de granulat (25) du récipient de dépoussiérage (9), la commande (22) déclenche le dépoussiérage par lots.

2. Le dispositif selon la revendication 1,
**caractérisé en ce que**
- la section transversale du récipient de dépoussiérage (9) se rétrécit dans la partie inférieure en direction de l'ouverture de sortie de granulat (25) sous la forme d'une surface conique (28'),
- les buses d'air comprimé (31) sont disposées dans la surface conique (28').

3. Le dispositif selon l'une des revendications précédentes,
**caractérisé en ce que**
- les buses de dispersion (31) peuvent être commandées en termes de pression et/ou de vitesse d'écoulement et/ou de débit volumique, en particulier par la commande (22), et/ou
- l'ionisateur (37) comprend une pointe d'ionisation qui est disposée dans la zone d'extrémité libre d'une conduite d'alimentation en air et qui s'étend dans une ouverture d'alimentation en gaz (36) dans la paroi du récipient de dépoussiérage (9) ou même dans l'espace intérieur du récipient de dépoussiérage (9).

4. Le dispositif selon l'une des revendications précédentes,
**caractérisé en ce que**
l'ouverture d'alimentation en gaz (36) avec l'ionisateur (37) qui y est raccordé est disposée soit dans la partie inférieure du récipient de dépoussiérage (9), en
particulier au-dessus du cône de sortie (28) ou dans le cône de sortie (28), en particulier dans ou sur une ouverture d'alimentation en gaz (36), ou
- est disposé en dessous de l'ouverture de sortie de granulat (25) dans l'espace entre le récipient (14), en particulier dans sa partie supérieure.

5. Le dispositif selon l'une des revendications précédentes,
**caractérisé en ce que**
- l'ouverture de sortie d'air (18) est ouverte en permanence et en particulier complètement, en particulier elle n'est pas recouverte par un tamis (5), et/ou
- la hauteur du récipient de dépoussiérage (9) est d'au moins 100 mm, mieux d'au moins 200 mm, mieux d'au moins 300 mm, mieux d'au moins 400 mm, et/ou
- la paroi périphérique du récipient de dépoussiérage (9) est un tube de verre vertical, ouvert en haut et en bas, en particulier avec une section transversale à symétrie de rotation, et la section transversale est inchangée, en particulier sur toute la longueur.

6. Le dispositif selon l'une des revendications précédentes,
**caractérisé en ce que**
- le dispositif comprend un séparateur de poussière, en particulier un filtre d'air d'échappement (2), et/ou un générateur de dépression, en particulier une buse d'air comprimé à éjecteur (21b), qui est disposé en aval du récipient de dépoussiérage (9),
et/ou
- l'ouverture d'entrée de granulat (8) est disposée dans la moitié supérieure, en particulier dans le tiers supérieur, de la hauteur du récipient de dépoussiérage (9).

7. Le dispositif selon l'une des revendications précédentes,
**caractérisé en ce que**
- les buses de dispersion (31) sont en mesure de générer un contre-courant (32) dirigé vers le haut de telle sorte que les grains de granulat (4) ainsi projeté vers le haut terminent leur mouvement ascendant, en grande partie sous l'effet de la gravité, avant d'atteindre l'ouverture de sortie d'air supérieure (18), et/ou
- la commande (22) présente des modes de fonctionnement pour le fonctionnement par lots et le fonctionnement continu et la commande peut être commutée entre ces deux modes de fonctionnement,
et/ou
- un récipient intermédiaire (14) est disposé en dessous de l'ouverture de sortie de granulat (25) sur la face inférieure du récipient de dépoussiérage (9).

8. Le dispositif selon l'une des revendications précédentes,
**caractérisé en ce que**
- le récipient de dépoussiérage (9) présente plusieurs ouvertures d'entrée de granulat (8) qui sont chacune reliées par une conduite de transport (15) à une lance d'aspiration (16) dans laquelle est disposée une buse d'éjection d'air comprimé (21a),
ou
- le récipient de dépoussiérage (9) ne comporte qu'une ouverture d'entrée de granulat (8) dont la conduite d'alimentation (15) présente, à l'extérieur du récipient de dépoussiérage (9), une ramification vers deux lances d'aspiration (16) dans chacune desquelles est disposée une buse d'éjection d'air comprimé (21a).

9. **Un procédé** de dépoussiérage par lots d'un granulat (4) au moyen d'un dispositif selon l'une des revendications précédentes, qui permet notamment d'éliminer la poussière (11) adhérant aux grains de granulat (4), et dans lequel,
A) lorsque le niveau de remplissage du récipient intermédiaire (14) situé en dessous de l'ouverture de sortie de granulat (25) atteint la hauteur de l'ouverture de sortie de granulat (25), le granulat est versé dans le récipient de dépoussiérage (9) jusqu'à un niveau de remplissage prédéfini, avec ou sans contre-courant,
B) le processus de remplissage est terminé lorsque le niveau de remplissage est atteint,
C) le dépoussiérage de la charge (4') introduite dans le récipient de dépoussiérage (9) est effectué au moyen d'un gaz ionisé, en particulier de l'air ionisé, et d'un fort tourbillonnement de granulat (4) par un contre-courant (32) ainsi que par l'évacuation, en particulier l'aspiration, du gaz chargé de poussières,
D) le récipient de dépoussiérage (9) est nettoyé par rinçage avec un gaz ionisé, en particulier de l'air ionisé,
E) après que le niveau de remplissage est descendu en dessous du niveau de remplissage prédéfini, au moins les étapes A) à C) ainsi que E) sont à nouveau exécutées.

10. Le procédé selon la revendication 9,
**caractérisé en ce que**
dans l'étape A)
- l'intensité du contre-courant (32) est réglée en contrôlant les buses de dispersion (31) en termes de pression et/ou de vitesse d'écoulement et/ou de débit volumique,
ou
- le contre-courant (32) est provoqué par, en particulier uniquement par, le gaz ionisé introduit dans la partie inférieure du récipient de dépoussiérage (9).

11. Le procédé selon l'une des revendications de procédé précédentes,
**caractérisé en ce que**
- l'aspiration du gaz chargé de poussière hors du récipient de dépoussiérage (9) et l'introduction d'air par les buses de dispersion (31) sont effectuées simultanément, en particulier toujours simultanément,
et/ou
- à l'étape C) le tourbillonnement de granulat (4) est effectué plusieurs fois de suite.

12. Le procédé selon l'une des revendications précédentes,
**caractérisé en ce que**
- l'ouverture de sortie de granulat (25) n'est fermée dans aucun état de fonctionnement par un élément de fermeture fixé au dispositif,
et/ou
- dans l'étape A) et/ou C) le granulat (4) n'atteint majoritairement pas l'ouverture supérieure de sortie d'air (18), en particulier le tube de remplissage (24).

13. Le procédé selon l'une des revendications de procédé précédentes,
**caractérisé en ce que**
- après la baisse du niveau de remplissage selon l'étape E), le processus de remplissage selon l'étape A) ne commence qu'après un décalage temporel prédéfini,
et/ou
- il est possible de procéder au choix, notamment au moyen du même dispositif, en mode par lots ou en mode continu, et notamment de commuter la commande (22) du dispositif entre un mode par lots et un mode continu.

14. Le procédé selon l'une des revendications de procédé précédentes,
**caractérisé en ce que**
- la hauteur de la zone d'inversion (30) jusqu'à laquelle le granulat (4) est projeté en tourbillons peut être réglée par l'intensité du contre-courant (32), et/ou
- le rinçage selon l'étape D) ne commence qu'après que le dépoussiérage selon l'étape C) est terminée, en particulier après que le niveau de remplissage est descendu en dessous du niveau de remplissage prédéfini conformément à l'étape e).

15. Le procédé selon l'une des revendications de procédé précédentes,
**caractérisé en ce que**
- lors du rinçage selon l'étape D) un volume multiple de l'ensemble du récipient de dépoussiérage (9) est introduit sous forme de gaz ionisé (34), et/ou
- le gaz (34), qui entre-temps n'est plus ionisé, du moins en partie, est éliminé en continu du récipient de dépoussiérage (9), en particulier par aspiration.

16. Le procédé selon l'une des revendications de procédé précédentes,
**caractérisé en ce que**
après le dépoussiérage d'une charge de granulat (4'), le contre-courant (32) est arrêté ou au moins réduit de telle sorte que le granulat (4) se trouvant dans le récipient de dépoussiérage (9) tombe vers le bas à travers l'ouverture de sortie de granulat (25).

17. Le procédé selon l'une des revendications de procédé précédentes,
**caractérisé en ce que**
- le granulat (4) est transporté vers le récipient de dépoussiérage (9) au moyen d'air comprimé
et/ou
- la poussière (11) est éliminée du récipient de dépoussiérage (9) au moyen d'air d'aspiration.

18. Le procédé selon l'une des revendications précédentes,
**caractérisé en ce que**
la pointe d'ionisation de l'ionisateur (37) est entourée par un gaz, en particulier de l'air, à introduire dans le récipient de dépoussiérage (9).

19. Le procédé selon l'une des revendications précédentes,
**caractérisé en ce que**
du gaz ionisé, en particulier de l'air ionisé,
- dans la partie inférieure du récipient de dépoussiérage (9), en particulier au-dessus du cône de sortie (28)
ou à travers le cône de sortie (28),
- en dessous de l'ouverture de sortie de granulat (25), est introduit dans le récipient intermédiaire (14).
